(19) Europäisches Patentamt / European Patent Office / Office européen des brevets

(11) **EP 3 285 450 B1**

(12) **EUROPEAN PATENT SPECIFICATION**

(45) Date of publication and mention
of the grant of the patent:
**25.11.2020 Bulletin 2020/48**

(51) Int Cl.:
*H04L 27/26* *(2006.01)*    *H04L 25/02* *(2006.01)*
*H04B 7/08* *(2006.01)*    *H04B 17/309* *(2015.01)*

(21) Application number: **15888966.7**

(22) Date of filing: **06.09.2015**

(86) International application number:
**PCT/CN2015/088957**

(87) International publication number:
**WO 2016/165266 (20.10.2016 Gazette 2016/42)**

(54) **ANTENNA FAILURE COMPENSATION METHOD AND APPARATUS**

VERFAHREN UND VORRICHTUNG ZUR KOMPENSATION VON ANTENNENFEHLERN

PROCÉDÉ ET APPAREIL DE COMPENSATION DES DÉFAILLANCES D'ANTENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2015 CN 201510172214**

(43) Date of publication of application:
**21.02.2018 Bulletin 2018/08**

(73) Proprietor: **ZTE Corporation
Shenzhen, Guangdong 518057 (CN)**

(72) Inventor: **WU, Hao
Shenzhen, Guangdong 518057 (CN)**

(74) Representative: **Ligi, Stefano et al
GLP S.r.l.
Viale Europa Unita, 171
33100 Udine (IT)**

(56) References cited:
**EP-A1- 2 665 207        CN-A- 1 346 193
CN-A- 101 304 399    CN-A- 101 989 968
CN-A- 104 283 819    US-A1- 2013 315 342**

- **ZENG ZHAOHUA: "Study on frequency offset
estimation and compensation in LTE uplink
system", INFORMATION MANAGEMENT AND
ENGINEERING (ICIME), 2010 THE 2ND IEEE
INTERNATIONAL CONFERENCE ON, IEEE,
PISCATAWAY, NJ, USA, 16 April 2010
(2010-04-16), pages 211-215, XP031684265, ISBN:
978-1-4244-5263-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### TECHNICAL FIELD

The disclosure relates to the field of wireless communications, and in particular to an antenna failure compensation method and apparatus.

### BACKGROUND

Long Term Evolution (LTE) is the result of the long-term evolution of technical standards formulated by the 3rd Generation Partnership Project (3GPP) for Universal Mobile Telecommunications System (UMTS). Orthogonal Frequency Division Multiplexing (OFDM), a high-speed transmission technology advantaged in high spectrum utilization efficiency and excellent anti-multipath performance, has attracted wide attention. As one of core technologies of LTE systems, multi-antenna technology, when used in combination with OFDM, realizes the joint processing and scheduling of multidimensional signals wonderfully, thus greatly improving the flexibility and efficiency of a system. The peak rate and the average throughout of an LTE system can be consequentially improved significantly. Multi-antenna technologies including antenna diversity, beam forming and spatial multiplexing have been widely applied to LTE systems.

As more and more antennas are used in an LTE system, the probability of antenna failure increases. The performance of a system degrades significantly when antenna failure occurs.

EP 2 665 207 A1 discloses techniques aimed at reducing the complexity of the processing required for the estimation of the downlink radio link quality of the serving cell.

The article of Zeng Zhaohua ("Study on frequency offset estimation and compensation in LTE uplink system", Information Management and Engineering (ICIME), 2010, the 2nd IEEE International Conference ON, IEEE, Piscataway, NJ, USA, 16 April 2010 (2010-04-16), pages 211-215, XP031684265) discloses an efficient frequency offset estimation and compensation method.

### SUMMARY

In view of the above, embodiments of the disclosure are intended to provide an antenna failure compensation method and apparatus to compensate for system performance in the case of an antenna failure and to improve the performance of a wireless communication system.

To this end, technical solutions of the disclosure are defined as in the claims.

### BRIEF DESCRIPTION OF THE DRAWINGS

Fig. 1 is a schematic diagram illustrating the architecture of an OFDM system in embodiments of the disclosure.
Fig. 2 is a flowchart illustrating the flow of an antenna failure compensation method provided in embodiments of the disclosure.
Fig. 3 is a schematic diagram illustrating the performance of a system when two antennas are both normal in embodiments of the disclosure.
Fig. 4 is a schematic diagram illustrating the performance of a system when one antenna runs normally and the other malfunctions in embodiments of the disclosure.
Fig. 5 is a schematic diagram illustrating the structure of an antenna failure compensation apparatus provided in embodiments of the disclosure.

### DETAILED DESCRIPTION

The technical solutions provided in embodiments of the disclosure will be fully and clearly described below with reference to accompanying drawings provided for embodiments of the disclosure.

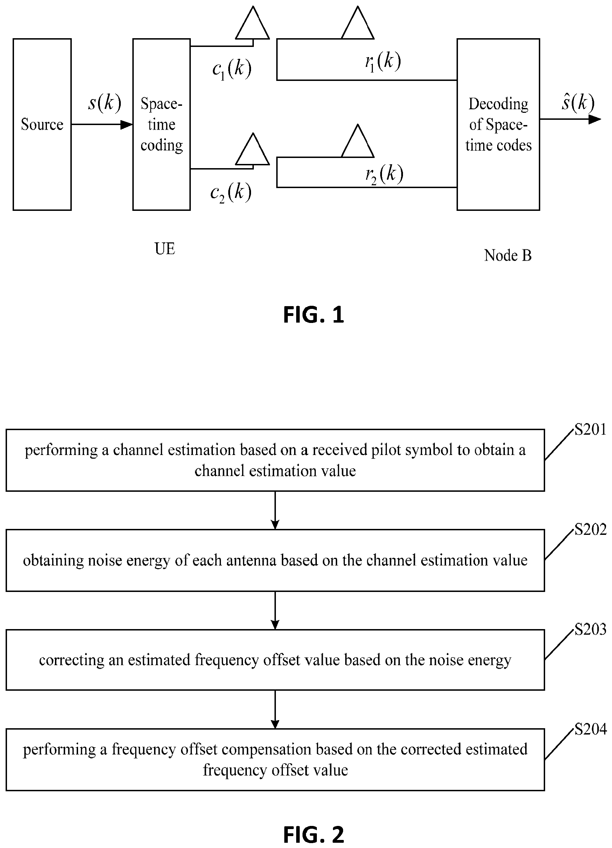

Embodiments of the disclosure provide an OFDM system whose systemic architecture is schematically illustrated in Fig. 1, and refers to Fig. 1, the system is a two-input two-output communication system, that is, an eNode B receives, with two antennas, the signals of User Equipment (UE). In this case, if one of the two antennas malfunctions, then the resulting imbalance of the signal-to-noise ratios of the data received by the two antennas will lead to a big noise energy difference and consequentially a severe degradation in system performance.

To address this problem, embodiments of the disclosure provide an antenna failure compensation method applied to the OFDM system. Fig. 2 is a flowchart illustrating the flow of the antenna failure compensation method provided in embodiments of the disclosure, and as shown in Fig. 2, the method includes the following steps that:

S201: a channel estimation is performed based on a received pilot symbol to obtain a channel estimation value;
S202: the noise energy of each antenna is obtained based on the channel estimation value;

First, the channel estimation value obtained in S201 is filtered to obtain a filtered channel estimation value. And then, the noise energy is obtained based on the unfiltered channel estimation value, that is, the channel estimation value obtained in S201, and the filtered channel estimation value.

In practical applications, the noise energy of each antenna is obtained according to the difference between the unfiltered channel estimation value and the filtered channel estimation value. The channel estimation value can be filtered using a Minimum Mean Square Error (MMSE) filtering method or a Fast Fourier Transformation (FFT) filtering method. And apparently, other filtering methods, to which no specific limitations are given herein, are also adoptable.

For example, a channel estimation value $H(k,ka_{Rx},i)$ is obtained in S201, the channel estimation value is filtered to obtain a filtered channel estimation value $H'(k,ka_{Rx},i)$, and then, a noise energy $NI_{ka_{Rx}}$ is obtained by calculating the difference between the unfiltered channel estimation value and the filtered channel estimation value, where k is a carrier index number, $ka_{Rx}$ is an antenna index number, and $i$ is a time slot index number.

S203: an estimated frequency offset value is corrected based on the noise energy;

in practical applications, an estimated frequency offset value can be corrected according to the following formula (1):

$$\Delta f_{adjust} = \frac{\Delta\phi_{adjust}}{2\pi \times \Delta t} \quad (1) \ ,$$

where $\Delta f_{adjust}$ is a corrected estimated frequency offset value, and $\Delta\phi_{adjust}$ is a corrected phase difference, wherein

$$\Delta\phi_{adjust} = angle\left(\sum_{ka_{Rx}=0}^{ka_{Rx}-1} \Delta P_{ka_{Rx}} / NI_{ka_{Rx}}\right), \quad \text{where} \quad \Delta P_{ka_{Rx}} = \sum_{k=0}^{M-1} H(k,ka_{Rx},1) \times conj\left(H(k,ka_{Rx},0)\right), \quad \text{where}$$

$\Delta P_{ka_{Rx}}$ is a correlation value for a channel estimation between time slots, $\Delta t$ is the interval between time slots, and M is the number of carriers.

For an OFDM system in an LTE, $\Delta t=0.5\times10^{-3}$. Undoubtedly, for an OFDM system in another wireless communication network, $\Delta t$ can be another value which is practically set and to which no specific limitations are given in embodiments of the disclosure.

S204: a frequency offset compensation is performed based on the corrected estimated frequency offset value.

After the corrected estimated frequency offset value is obtained in S203, an inter-symbol frequency offset compensation phase and an intra-symbol frequency offset compensation phase are separately obtained based on the corrected estimated frequency offset value, and then a frequency offset compensation is performed based on the inter-symbol frequency offset compensation phase and the intra-symbol frequency offset compensation phase.

In practical applications, for a regular CP, the inter-symbol frequency offset compensation phase can be obtained according to the following formula (2), and for an extended CP, the inter-symbol frequency offset compensation phase can be obtained according to the following formula (3):

$$\theta_{1data,l}(k) = \Delta f_{adjust} \times \frac{3-l}{7} \ (2),$$

and

$$\theta_{1data,l}(k) = \Delta f_{adjust} \times \frac{2-l}{6} \ (3),$$

where 1data is an inter-symbol operation;
the intra-symbol frequency offset compensation phase can be obtained according to the following formula (4):

$$\theta_{2data,i,l}(k) = \Delta f_{adjust} \times (\frac{1}{15} - \frac{k}{7.5 \times M}) \ (4),$$

where $\theta_{2data,i,l}(k)$ is an intra-symbol frequency offset compensation phase, and 2data is an intra-symbol operation.

After the inter-symbol frequency offset compensation phase and the intra-symbol frequency offset compensation phase are obtained, a frequency offset compensation factor $e^{j\theta_{1data,l}(k)}e^{j\theta_{2data,l}(k)}$ is determined based on the inter-symbol frequency offset compensation phase and the intra-symbol frequency offset compensation phase, and a frequency offset compensation is performed according to the frequency offset compensation factor.

The flow of the foregoing antenna failure compensation method is described below with reference to specific embodiments.

Embodiment 1

It is assumed that two antennas in an OFDM system are both normal and the frequency offset of the system is 0 Hz.

Step 1: a Node B separately performs a channel estimation based on the pilot symbols received by two antennas and obtains a result that the channel estimation values of a first antenna in two time slots are $H(k,0,0)$ and $H(k,0,1)$ and those of a second antenna in two time slots are $H(k,1,0)$ and $H(k,1,1)$;

Step 2: the Node B calculates the phase difference between the two antennas and calculates an estimated frequency offset value of 10Hz according to the phase difference;

Step 3: the Node B separately performs an MMSE filtering on the channel estimation values of the two antennas;

Step 4: the Node B calculates noise energies $NI_0$ and $NI_1$ of the two antennas according to the unfiltered channel estimation value and the filtered channel estimation value and obtains a result that $NI_0$ is 10000 and $NI_1$ is 12000;

Step 5: the Node B corrects a frequency offset using the noise energy of each antenna to obtain a corrected estimated frequency offset value of 8 Hz; and

Step 6: the Node B performs a frequency offset compensation using the corrected estimated frequency offset value.

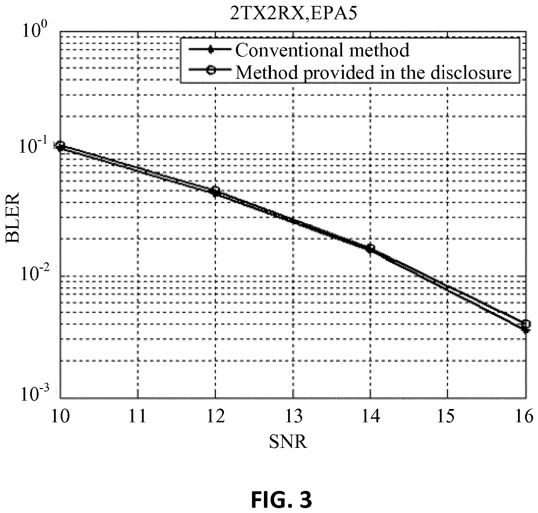

Fig. 3 is a schematic diagram illustrating the performance of a system when two antennas are both normal in embodiments of the disclosure, and refer to Fig. 3, it is apparent that the antenna failure compensation method provided herein causes no negative influences on the performance of a system when two antennas are normal.

Embodiment 2

It is assumed that the frequency offset of an OFDM system is 0 Hz when an antenna runs normally and the other malfunctions in the OFDM system.

Step 1: a Node B separately performs a channel estimation based on the pilot symbols received by two antennas and obtains a result that the channel estimation values of a first antenna in two time slots are $H(k,0,0)$ and $H(k,0,1)$ and those of a second antenna in two time slots are $H(k,1,0)$ and $H(k,1,1)$;

Step 2: the Node B calculates the phase difference of the two antennas and calculates an estimated frequency offset value of 200 Hz according to the phase difference;

Step 3: the Node B separately performs an MMSE filtering on the channel estimation values of the two antennas;

Step 4: the Node B calculates noise energies $NI_0$ and $NI_1$ of the two antennas according to the unfiltered channel estimation value and the filtered channel estimation value and obtains a result that $NI_0$ is 8000 and $NI_1$ is 300000;

Step 5: the Node B corrects a frequency offset using the noise energy of each antenna to obtain the corrected estimated frequency offset value of 15 Hz; and

Step 6: the Node B performs a frequency offset compensation using the corrected estimated frequency offset value.

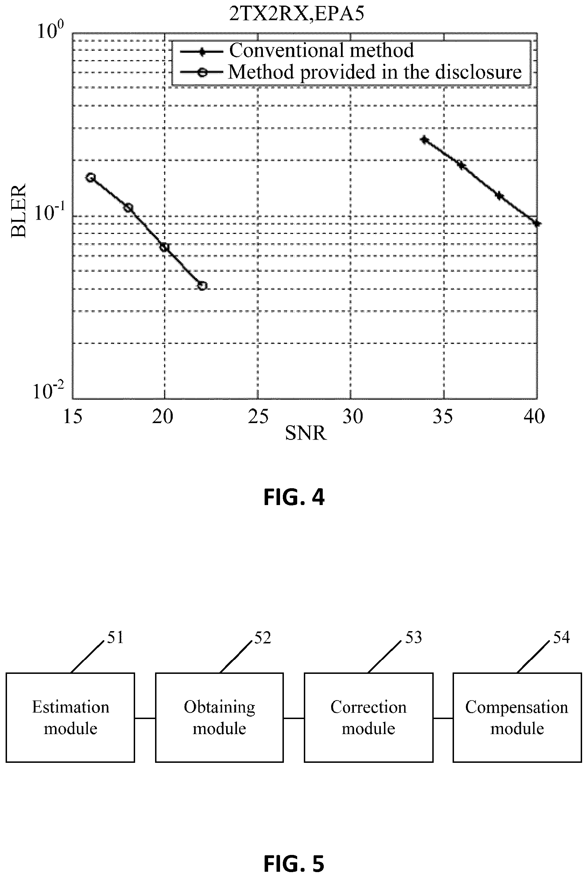

Fig. 4 is a schematic diagram illustrating the performance of a system when one antenna runs normally and the other malfunctions in embodiments of the disclosure, and refer to Fig. 4, it is apparent that the antenna failure compensation method provided herein significantly improves the performance of a system in the case of an antenna failure.

It can be known from above that because of the sequential implementation of correcting the frequency offset using the noise energy of each antenna, obtaining an inter-symbol frequency offset compensation phase and an intra-symbol frequency offset compensation phase using the corrected frequency offset and compensating for the frequency offset based on the inter-symbol frequency offset compensation phase and the intra-symbol frequency offset compensation phase, the performance of a system is compensated when an antenna failure occurs, thus improving the performance of a wireless communication system.

Based on the same inventive concept, an antenna failure compensation apparatus is also provided in embodiments of the disclosure which can execute the foregoing antenna failure compensation method described in the foregoing one or more embodiments.

Fig. 5 is a schematic diagram illustrating the structure of an antenna failure compensation apparatus provided in embodiments of the disclosure, and refer to Fig. 5, the apparatus includes: an estimation module 51 arranged to perform the channel estimation base on a received pilot symbol to obtain a channel estimation value; an obtaining module 52 arranged to obtain the noise energy of each antenna based on the channel estimation value; a correction module 53 arranged to correct an estimated frequency offset value based on the noise energy; and a compensation module 54 arranged to perform a frequency offset compensation based on the corrected estimated frequency offset value.

The obtaining module 52 may include: a filtering sub-module arranged to filter the channel estimation value; and an obtaining sub-module arranged to obtain a noise energy based on the unfiltered channel estimation value and the filtered channel estimation value.

The compensation module 54 may be arranged to obtain an inter-symbol frequency offset compensation phase and an intra-symbol frequency offset compensation phase based on the corrected estimated frequency offset value and perform a frequency offset compensation based on the inter-symbol frequency offset compensation phase and the intra-symbol frequency offset compensation phase.

The estimation module 51, the obtaining module 52, the correction module 53 and the compensation module 54 may be achieved by a Central Processing Unit (CPU), a Micro Processing Unit (MPU), a Digital Signal Processor (DSP) or a Field Programmable Gate Array (FPGA) arranged in an antenna failure compensation apparatus.

Those skilled in the art should appreciate that embodiments of the disclosure may be provided as methods, systems or computer program products. Thus, the disclosure may be embodied as hardware, software or combinations thereof. Moreover, the disclosure may be embodied as a computer program product executed on one or more computer-usable storage mediums (including, but not limited to be: a disk memory and an optical memory) on which computer-readable program codes are stored.

The disclosure is described with reference to flowcharts and/or block diagrams of the methods, the devices (systems) and the computer program products provided in embodiments of the disclosure. It should be appreciated that each flow and/or block in the flowcharts and/or the block diagrams and combinations thereof can be realized by computer program instructions. These computer program instructions can be installed on the processor of a general computer, a dedicated computer, an embedded processor or another programmable data processing device to generate a machine so that a device for realizing a function specified in one or more flows and/or blocks shown in the flowcharts and/or the block diagrams can be generated by executing the instructions using the processor of the computer or another programmable data processing device.

These computer program instructions may also be stored on a computer-readable memory capable of instructing a computer or another programmable data processing device to work in a specific way, so that a product including an instruction apparatus for realizing the functions specified in one or more flows of the flowcharts and/or one or more blocks of the block diagrams is generated by the instructions stored on the computer readable memory.

These computer program instructions may also be loaded onto a computer or another programmable data processing device, so that a processing realizable to the computer is conducted by executing a series of operation steps on the computer or the programmable device, and therefore the instructions executed on the computer or the programmable device create steps for realizing a function specified in one or more flows of the flowcharts and/or one or more blocks of the block diagrams.

Although the preferred embodiments of the disclosure have been described above, those embodiments are not intended to limit the scope of protection of the disclosure.

## Claims

1. An antenna failure compensation method, comprising:

    performing a channel estimation based on a received pilot symbol to obtain a channel estimation value (S201);
    obtaining noise energy of each antenna based on the channel estimation value (S202);
    correcting an estimated frequency offset value based on the noise energy (S203), wherein correcting the estimated frequency offset value based on the noise energy is performed according to the following formula:

$$\Delta f_{adjust} = \frac{\Delta \phi_{adjust}}{2\pi \times \Delta t},$$

where $\Delta f_{adjust}$ is the corrected estimated frequency offset value, and $\Delta \phi_{adjust}$ is a corrected phase difference,

wherein $\quad \Delta \phi_{adjust} = angle \left( \sum_{ka_{Rx}=0}^{ka_{Rx}-1} \Delta P_{ka_{Rx}} / NI_{ka_{Rx}} \right),$ where

$\Delta P_{ka_{Rx}} = \sum_{k=0}^{M-1} H(k,ka_{Rx},1) \times conj\left( H(k,ka_{Rx},0) \right),$ $NI_{ka_{Rx}}$ is the noise energy, $H(k,ka_{Rx},i)$ is the channel estimation value, k is a carrier index number, $ka_{Rx}$ is an antenna index number, $i$ is a time slot index number, M is the number of carriers, and $\Delta t$ is an interval between time slots; and
performing a frequency offset compensation based on the corrected estimated frequency offset value (S204).

2. The method according to claim 1, wherein obtaining the noise energy of each antenna based on the channel estimation value comprises:

   filtering the channel estimation value; and
   obtaining the noise energy based on a unfiltered channel estimation value and the filtered channel estimation value.

3. The method according to claim 1, wherein performing the frequency offset compensation based on the corrected estimated frequency offset value comprises:

   obtaining an inter-symbol frequency offset compensation phase and an intra-symbol frequency offset compensation phase based on the corrected estimated frequency offset value; and
   performing the frequency offset compensation based on the inter-symbol frequency offset compensation phase and the intra-symbol frequency offset compensation phase.

4. The method according to claim 3, wherein obtaining the inter-symbol frequency offset compensation phase based on the corrected frequency offset value comprises:

   for a regular Cyclic Prefix (CP), obtaining the inter-symbol frequency offset compensation phase according to the following formula: $\theta_{1data,l}(k) = \Delta f_{adjust} \times \frac{3-l}{7}$; and
   for an extended CP, obtaining the inter-symbol frequency offset compensation phase according to the following formula: $\theta_{1data,l}(k) = \Delta f_{adjust} \times \frac{2-l}{6},$
   where $\Delta f_{adjust}$ is a corrected estimated frequency offset value, k is a carrier index number, $i$ is a time slot index number, and 1data is an inter-symbol operation.

5. The method according to claim 3, wherein based on the corrected estimated frequency offset value, the intra-symbol frequency offset compensation phase is obtained according to the following formula:

$$\theta_{2data,i,l}(k) = \Delta f_{adjust} \times \left( \frac{1}{15} - \frac{k}{7.5 \times M} \right),$$

where $\theta_{2data,i,l}(k)$ is an intra-symbol frequency offset compensation phase, $\Delta f_{adjust}$ is a corrected estimated frequency offset value, k is a carrier index number, $l$ is a symbol index number, $i$ is a time slot index number, M is the number of carriers, and 2data is an intra-symbol operation.

6. The method according to claim 3, wherein performing the frequency offset compensation based on the inter-symbol frequency offset compensation phase and the intra-symbol frequency offset compensation phase comprises: determining a frequency offset compensation factor $e^{j\theta_{1data,l}(k)}e^{j\theta_{2data,l}(k)}$ based on the inter-symbol frequency offset compensation phase and the intra-symbol frequency offset compensation phase, where $\theta_{1data,l}(k)$ is the inter-symbol frequency offset compensation phase, $\theta_{2data,i,l}(k)$ is the intra-symbol frequency offset compensation phase, $k$ is a carrier index number, $l$ is a symbol index number, and $i$ is a time slot index number.

7. An antenna failure compensation apparatus, comprising:

an estimation module (51) configured to perform a channel estimation based on a received pilot symbol to obtain a channel estimation value;
an obtaining module (52) configured to obtain the noise energy of each antenna based on the channel estimation value;
a correction module (53) configured to correct an estimated frequency offset value based on the noise energy, wherein correcting the estimated frequency offset value based on the noise energy is performed according to the following formula:

$$\Delta f_{adjust} = \frac{\Delta \phi_{adjust}}{2\pi \times \Delta t},$$

where $\Delta f_{adjust}$ is the corrected estimated frequency offset value, and $\Delta \phi_{adjust}$ is a corrected phase difference,

wherein $\Delta \phi_{adjust} = angle\left(\sum_{ka_{Rx}=0}^{ka_{Rx}-1} \Delta P_{ka_{Rx}} / NI_{ka_{Rx}}\right)$, where

$\Delta P_{ka_{Rx}} = \sum_{k=0}^{M-1} H(k,ka_{Rx},1) \times conj\left(H(k,ka_{Rx},0)\right)$, $NI_{ka_{Rx}}$ is the noise energy, $H(k,ka_{Rx},i)$ is the channel estimation value, k is a carrier index number, $ka_{Rx}$ is an antenna index number, $i$ is a time slot index number, M is the number of carriers, and $\Delta t$ is an interval between time slots; and
a compensation module (54) configured to perform a frequency offset compensation based on the corrected estimated frequency offset value.

8. The apparatus according to claim 7, wherein the obtaining module (52) comprises:

a filtering sub-module configured to filter the channel estimation value; and
an obtaining sub-module configured to obtain the noise energy based on the unfiltered channel estimation value and the filtered channel estimation value.

9. The apparatus according to claim 7, wherein the compensation module (54) is configured to obtain an inter-symbol frequency offset compensation phase and an intra-symbol frequency offset compensation phase based on the corrected estimated frequency offset value and perform a frequency offset compensation based on the inter-symbol frequency offset compensation phase and the intra-symbol frequency offset compensation phase.

10. A computer storage medium comprising computer-executable instructions for executing the antenna failure compensation method of any one of claims 1-6.

**Patentansprüche**

1. Verfahren zur Kompensation von Antennenfehlem, umfassend:

Durchführen einer Kanalschätzung aufgrund eines empfangenen Pilotsymbols, um einen Kanalschätzungswert zu erhalten (S201);
Erhalten von Schallenergie jeder Antenne aufgrund des Kanalschätzungswertes (S202);
Korrigieren eines geschätzten Frequenzversatzwertes aufgrund der Schallenergie (S203), worin das Korrigieren des geschätzten Frequenzversatzwertes aufgrund der Schallenergie gemäß der folgenden Formel durchgeführt

wird:

$$\Delta f_{adjust} = \frac{\Delta\phi_{adjust}}{2\pi \times \Delta t},$$

wo $\Delta f_{adjust}$ der korrigierte geschätzte Frequenzversatzwert ist und $\Delta\phi_{adjust}$ eine korrigierte Phasendifferenz ist,

worin $\quad \Delta\phi_{adjust} = angle\left(\sum_{ka_{Rx}=0}^{ka_{Rx}-1} \Delta P_{ka_{Rx}} / NI_{ka_{Rx}}\right) \quad$ ist, $\quad$ wo

$\Delta P_{ka_{Rx}} = \sum_{k=0}^{M-1} H(k,ka_{Rx},1) \times conj\left(H(k,ka_{Rx},0)\right)$ ist, $NI_{ka_{Rx}}$ die Schallenergie ist, $H$ (k, $ka_{Rx}$, i) der Kanalschätzungswert ist, k eine Trägerindexzahl ist, $ka_{Rx}$ eine Antennenindexzahl ist, i eine Zeitschlitzindexzahl ist, M die Zahl der Träger ist und $\Delta t$ ein Intervall zwischen Zeitschlitzen ist; und
Durchführen einer Frequenzversatzkompensation aufgrund des korrigierten geschätzten Frequenzversatzwertes (S204).

2. Verfahren nach Anspruch 1, worin das Erhalten der Schallenergie jeder Antenne aufgrund des Kanalschätzungswertes umfasst:

   Filtern des Kanalschätzungswertes; und
   Erhalten der Schallenergie aufgrund eines ungefilterten Kanalschätzungswertes und des gefilterten Kanalschätzungswertes.

3. Verfahren nach Anspruch 1, worin das Durchführen einer Frequenzversatzkompensation aufgrund des korrigierten geschätzten Frequenzversatzwertes umfasst:

   Erhalten einer Intersymbolfrequenzversatzkompensationsphase und einer Intrasymbolfrequenzversatzkompensationsphase aufgrund des korrigierten geschätzten Frequenzversatzwertes; und
   Durchführen der Frequenzversatzkompensation aufgrund der Intersymbolfrequenzversatzkompensationsphase und der Intrasymbolfrequenzversatzkompensationsphase.

4. Verfahren nach Anspruch 3, worin das Erhalten der Intersymbolfrequenzversatzkompensationsphase aufgrund des korrigierten Frequenzversatzwertes umfasst:

   für ein regelmäßiges zyklisches Präfix (CP), Erhalten der Intersymbolfrequenzversatzkompensationsphase gemäß der folgenden Formel:

$$\theta_{1data,l}(k) = \Delta f_{adjust} \times \frac{3-l}{7},$$

   und
   für ein erweitertes CP, Erhalten der Intersymbolfrequenzversatzkompensationsphase gemäß der folgenden

   Formel: $\theta_{1data,l}(k) = \Delta f_{adjust} \times \frac{2-l}{6}$,

   wo $\Delta f_{adjust}$ ein korrigierter geschätzter Frequenzversatzwert ist, k eine Trägerindexzahl ist, i eine Zeitschlitzindexzahl ist und 1data eine Intersymboloperation ist.

5. Verfahren nach Anspruch 3, worin aufgrund des korrigierten geschätzten Frequenzversatzwertes, die Intrasymbolfrequenzversatzkompensationsphase gemäß der folgenden Formel erhalten wird:

$$\theta_{2data,i,l}(k) = \Delta f_{adjust} \times (\frac{1}{15} - \frac{k}{7.5 \times M})$$,

wo $\theta_{2data,i,l}(k)$ eine Intrasymbolfrequenzversatzkompensationsphase ist, $\Delta f_{adjust}$ ein korrigierter geschätzter Frequenzversatzwert ist, $k$ eine Trägerindexzahl ist, $l$ eine Symbolindexzahl ist, $i$ eine Zeitschlitzindexzahl ist, M die Zahl der Träger ist und 2data eine Intrasymboloperation ist.

6. Verfahren nach Anspruch 3, worin das Durchführen der Frequenzversatzkompensation aufgrund der Intersymbolfrequenzversatzkompensationsphase und der Intrasymbolfrequenzversatzkompensationsphase umfasst:
   Bestimmen eines Frequenzversatzkompensationsfaktors $e^{j\theta_{1data,l}(k)}e^{j\theta_{2data,l}(k)}$ aufgrund der Intersymbolfrequenzversatzkompensationsphase und der Intrasymbolfrequenzversatzkompensationsphase, wo $\theta_{1data,l}(k)$ die Intersymbolfrequenzversatzkompensationsphase ist, $\theta_{2data,l}(k)$ die Intrasymbolfrequenzversatzkompensationsphase, $k$ eine Trägerindexzahl ist, $l$ eine Symbolindexzahl ist und $i$ eine Zeitschlitzindexzahl ist.

7. Vorrichtung zur Kompensation von Antennenfehlern, umfassend:

   ein Schätzmodul (51), das dazu eingerichtet ist, eine Kanalschätzung aufgrund eines empfangenen Pilotsymbols durchzuführen, um einen Kanalschätzungswert zu erhalten;
   ein Erhaltungsmodul (52), das dazu eingerichtet ist, die Schallenergie jeder Antenne aufgrund des Kanalschätzungswertes zu erhalten;
   ein Korrekturmodul (53), das dazu eingerichtet ist, einen geschätzten Frequenzversatzwert aufgrund der Schallenergie zu korrigieren, worin das Korrigieren des geschätzten Frequenzversatzwertes aufgrund der Schallenergie gemäß der folgenden Formel durchgeführt wird:

$$\Delta f_{adjust} = \frac{\Delta\phi_{adjust}}{2\pi \times \Delta t}$$,

   wo $\Delta f_{adjust}$ der korrigierte geschätzte Frequenzversatzwert ist und $\Delta\phi_{adjust}$ eine korrigierte Phasendifferenz ist,

   worin $$\Delta\phi_{adjust} = angle\left(\sum_{ka_{Rx}=0}^{ka_{Rx}-1} \Delta P_{ka_{Rx}} / NI_{ka_{Rx}}\right)$$ ist, wo

$$\Delta P_{ka_{Rx}} = \sum_{k=0}^{M-1} H(k,ka_{Rx},1) \times conj\left(H(k,ka_{Rx},0)\right)$$ ist, $NI_{ka_{Rx}}$ die Schallenergie ist, $H(k, ka_{Rx}, i)$ der Kanalschätzungswert ist, k eine Trägerindexzahl ist, $ka_{Rx}$ eine Antennenindexzahl ist, $i$ eine Zeitschlitzindexzahl ist, M die Zahl der Träger ist und $\Delta t$ ein Intervall zwischen Zeitschlitzen ist; und
   ein Kompensationsmodul (54), das dazu eingerichtet ist, eine Frequenzversatzkompensation aufgrund des korrigierten geschätzten Frequenzversatzwertes durchzuführen.

8. Vorrichtung nach Anspruch 7, worin das Erhaltungsmodul (52) umfasst:

   ein Filterungsuntermodul, das dazu eingerichtet ist, den Kanalschätzungswert zu filtern; und
   ein Erhaltungsuntermodul, das dazu eingerichtet ist, die Schallenergie aufgrund des ungefilterten Kanalschätzungswertes und des gefilterten Kanalschätzungswertes zu erhalten.

9. Vorrichtung nach Anspruch 7, worin das Kompensationsmodul (54) dazu eingerichtet ist, eine Intersymbolfrequenzversatzkompensationsphase und eine Intrasymbolfrequenzversatzkompensationsphase aufgrund des korrigierten geschätzten Frequenzversatzwertes zu erhalten und eine Frequenzversatzkompensation aufgrund der Intersymbolfrequenzversatzkompensationsphase und der Intrasymbolfrequenzversatzkompensationsphase durchzuführen.

10. Computerspeichermedium, das vom Computer ausführbare Anweisungen zur Ausführung des Verfahrens zur Kompensation von Antennenfehlern nach einem der Ansprüche 1-6 umfasst.

**Revendications**

1. Procédé de compensation de panne d'antenne, comprenant :

la réalisation d'une estimation de canal sur la base d'un symbole pilote reçu pour obtenir une valeur d'estimation de canal (S201) ;
l'obtention de l'énergie de bruit de chaque antenne sur la base de la valeur d'estimation de canal (S202) ;
la correction d'une valeur de décalage de fréquence estimée sur la base de l'énergie de bruit (S203), où la correction de la valeur de décalage de fréquence estimée sur la base de l'énergie de bruit est réalisée selon la formule suivante :

$$\Delta f_{adjust} = \frac{\Delta \phi_{adjust}}{2\pi \times \Delta t},$$

où $\Delta f_{adjust}$ est la valeur de décalage de fréquence estimée corrigée, et $\Delta \phi_{adjust}$ est une différence de phase corrigée, où $\Delta \phi_{adjust} = angle\left(\sum_{ka_{Rx}=0}^{ka_{Rx}-1} \Delta P_{ka_{Rx}} / NI_{ka_{Rx}}\right)$, où $\Delta P_{ka_{Rx}} = \sum_{k=0}^{M-1} H(k,ka_{Rx},1) \times conj(H(k,ka_{Rx},0))$, $NI_{ka_{Rx}}$ est l'énergie de bruit, $H(k,ka_{Rx},i)$ est la valeur d'estimation de canal, k est un nombre d'indice de porteuse, $ka_{Rx}$ est un nombre d'indice d'antenne, i est un nombre d'indice d'intervalle de temps, M est le nombre de porteuses, et $\Delta t$ est un intervalle entre des intervalles de temps ; et
la réalisation d'une compensation de décalage de fréquence sur la base de la valeur de décalage de fréquence estimée corrigée (S204).

2. Procédé selon la revendication 1, où l'obtention de l'énergie de bruit de chaque antenne sur la base de la valeur d'estimation de canal comprend :

le filtrage de la valeur d'estimation de canal ; et
l'obtention de l'énergie de bruit sur la base d'une valeur d'estimation de canal non filtrée et de la valeur d'estimation de canal filtrée.

3. Procédé selon la revendication 1, où la réalisation de la compensation de décalage de fréquence sur la base de la valeur de décalage de fréquence estimée corrigée comprend :

l'obtention d'une phase de compensation de décalage de fréquence inter-symbole et d'une phase de compensation de décalage de fréquence intra-symbole sur la base de la valeur de décalage de fréquence estimée corrigée ; et
la réalisation de la compensation de décalage de fréquence sur la base de la phase de compensation de décalage de fréquence inter-symbole et de la phase de compensation de décalage de fréquence intra-symbole.

4. Procédé selon la revendication 3, où l'obtention de la phase de compensation de décalage de fréquence inter-symbole sur la base de la valeur de décalage de fréquence corrigée comprend :

pour un préfixe cyclique régulier (CP), l'obtention de la phase de compensation de décalage de fréquence inter-symbole selon la formule suivante : $\theta_{1data,l}(k) = \Delta f_{adjust} \times \frac{3-l}{7}$ ; et

pour un CP étendu, l'obtention de la phase de compensation de décalage de fréquence inter-symbole selon la formule suivante : $\theta_{1data,l}(k) = \Delta f_{adjust} \times \frac{2-l}{6}$,

où $\Delta f_{adjust}$ est une valeur de décalage de fréquence estimée corrigée, k est un numéro d'indice de porteuse, i est un numéro d'indice d'intervalle de temps, et 1data est une opération inter-symbole.

**5.** Procédé selon la revendication 3, où, sur la base de la valeur de décalage de fréquence estimée corrigée, la phase de compensation de décalage de fréquence intra-smbole est obtenue selon la formule suivante :

$$\theta_{2data,i,l}(k) = \Delta f_{adjust} \times \left(\frac{1}{15} - \frac{k}{7.5 \times M}\right),$$

où $\theta_{2data,i,l}(k)$ est une phase de compensation de décalage de fréquence intra-symbole, $\Delta f_{adjust}$ est une valeur de décalage de fréquence estimée corrigée, $k$ est un numéro d'indice de porteuse, $l$ est un numéro d'indice de symbole, $i$ est un numéro d'indice d'intervalle de temps, M est le nombre de porteuses, et 2data est une opération intra-symbole.

**6.** Procédé selon la revendication 3, où la réalisation de la compensation de décalage de fréquence sur la base de la phase de compensation de décalage de fréquence inter-symbole et de la phase de compensation de décalage de fréquence intra-symbole comprend :

la détermination d'un facteur de compensation de décalage de fréquence $e^{j\theta_{1data,l}(k)}e^{j\theta_{2data,l}(k)}$ sur la base de la phase de compensation de décalage de fréquence inter-symbole et de la phase de compensation de décalage de fréquence intra-symbole, où $\theta_{1data,l}(k)$ est la phase de compensation de décalage de fréquence inter-symbole, $\theta_{2data,,i,l}(k)$ est la phase de compensation de décalage de fréquence intra-symbole, $k$ est un numéro d'indice de porteuse, $l$ est un numéro d'indice de symbole, et $i$ est un numéro d'indice d'intervalle de temps.

**7.** Appareil de compensation de panne d'antenne, comprenant :

un module d'estimation (51) configuré pour réaliser une estimation de canal sur la base d'un symbole pilote reçu pour obtenir une valeur d'estimation de canal ;
un module d'obtention (52) configuré pour obtenir l'énergie de bruit de chaque antenne sur la base de la valeur d'estimation de canal ;
un module de correction (53) configuré pour corriger une valeur de décalage de fréquence estimée sur la base de l'énergie de bruit, où la correction de la valeur de décalage de fréquence estimée sur la base de l'énergie de bruit est réalisée selon la formule suivante :

$$\Delta f_{adjust} = \frac{\Delta \phi_{adjust}}{2\pi \times \Delta t},$$

où $\Delta f_{adjust}$ est la valeur de décalage de fréquence estimée corrigée, et $\Delta \phi_{adjust}$ est une différence de phase corrigée, où $\Delta \phi_{adjust} = angle\left(\sum_{ka_{Rx}=0}^{ka_{Rx}-1} \Delta P_{ka_{Rx}}/NI_{ka_{Rx}}\right),$ où $\Delta P_{ka_{Rx}} = \sum_{k=0}^{M-1} H(k,ka_{Rx},1) \times conj(H(k,ka_{Rx},0)),$ $NI_{ka_{Rx}}$ est l'énergie de bruit, $H(k,ka_{Rx},i)$ est la valeur d'estimation de canal, k est un nombre d'indice de porteuse, $ka_{Rx}$ est un nombre d'indice d'antenne, $i$ est un nombre d'indice d'intervalle de temps, M est le nombre de porteuses, et $\Delta t$ est un intervalle entre des intervalles de temps ; et
un module de compensation (54) configuré pour réaliser une compensation de décalage de fréquence sur la base de la valeur de décalage de fréquence estimée corrigée.

**8.** Dispositif selon la revendication 7, où le module d'obtention (52) comprend :

un sous-module de filtrage configuré pour filtrer la valeur d'estimation de canal ; et
un sous-module d'obtention configuré pour obtenir l'énergie de bruit sur la base de la valeur d'estimation de canal non filtrée et de la valeur d'estimation de canal filtrée.

**9.** Appareil selon la revendication 7, où le module de compensation (54) est configuré pour obtenir une phase de compensation de décalage de fréquence inter-symbole et une phase de compensation de décalage de fréquence intra-symbole sur la base de la valeur de décalage de fréquence estimée corrigée et pour réaliser une compensation de décalage de fréquence sur la base de la phase de compensation de décalage de fréquence inter-symbole et de la phase de compensation de décalage de fréquence intra-symbole.

**10.** Support de stockage informatique comprenant des instructions exécutables par ordinateur pour exécuter le procédé de compensation de panne d'antenne selon l'une quelconque des revendications 1 à 6.

**FIG. 1**

**FIG. 2**

FIG. 3

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2665207 A1

**Non-patent literature cited in the description**

• Study on frequency offset estimation and compensation in LTE uplink system. **ZENG ZHAOHUA.** Information Management and Engineering (ICIME), 2010, the 2nd IEEE International Conference ON. IEEE, 16 April 2010, 211-215